# EUROPÄISCHE PATENTSCHRIFT

(11) **EP 3 756 970 B1**
(45) Veröffentlichungstag und Bekanntmachung des Hinweises auf die Patenterteilung: **09.04.2025**
(21) Anmeldenummer: 20176974.2
(22) Anmeldetag: 28.05.2020
(51) Int. Cl.: B61L 15/00, G01F 23/00, B61D 41/00, B61D 35/00, G01F 23/38

(54) **SPURGEBUNDENES FAHRZEUG UND VERFAHREN ZUM BETREIBEN DESSELBEN**
TRACK-BOUND VEHICLE AND METHOD FOR OPERATING THE SAME
VÉHICULE GUIDÉ SUR RAILS ET PROCÉDÉ POUR LE FAIRE OPÉRER

(30) Priorität: 28.06.2019 DE 102019209478
(43) Veröffentlichungstag der Anmeldung: 30.12.2020
(73) Patentinhaber: Siemens Mobility GmbH, 81739 München (DE)
(72) Erfinder: Schless, Günther, 46485 Wesel (DE)
(74) Vertreter: Siemens Patent Attorneys

(56) Entgegenhaltungen:
- WO-A1-97/46435
- DE-A1- 102009 034 432
- DE-A1- 102016 213 898
- US-A1- 2010 117 817
- US-A1- 2016 351 927

## Beschreibung

Die Erfindung betrifft ein spurgebundenes Fahrzeug mit wenigstens einer Messeinrichtung und wenigstens einer Anzeigeeinrichtung zur Anzeige wenigstens eines Messwerts sowie ein Verfahren zum Betreiben des spurgeführten Fahrzeugs.

Füllstände unterschiedlicher Tanks eines Schienenfahrzeugs werden üblicherweise außen am Fahrzeug angezeigt. Dies können Tanks für Frisch- und Abwasser von WC und Galley sowie von Wasch- und Duschräumen in Reisezugwagen sein. Gleichermaßen können auch die Füllstände von weiteren Tanksystemen, wie z.B. Treibstofftanks, Tanks für eine Scheibenreinigungsanlage etc. von außen ablesbar am Fahrzeug angezeigt werden.

Der Füllstand des betroffenen Tanks wird mit Sensoren linear oder in Stufen erfasst, in der Mess- und Auswerteelektronik aufbereitet und außen am Fahrzeug mit einer Anzeige ausgegeben.

Zusätzlich können Füllstände auch an Leit- oder Service zentralen übermittelt werden. Eine typische Anzeige ist die Bandanzeige, in der für das Sanitärmodul die Pegelstände von Frisch- und Abwassertank durch eine Reihe von Leuchtdioden angezeigt werden. Zur Aufrechterhaltung dieser Funktionalität wird eine Spannungsversorgung benötigt.

Die Kontrolle von Füllständen an abgerüstet abgestellten Fahrzeugen ist ohne weitere Maßnahmen nicht möglich. Zum Ablesen muss, zumindest kurzzeitig, die Elektronik mit Spannung versorgt werden. Eine dauerhafte Spannungsversorgung kommt nicht in Betracht, da diese die Fahrzeugbatterien unerwünscht belasten würden.

Die WO 2018/019476 A1 beschreibt hierzu einen Reed-Kontakt, eingerichtet, um bei Anlegung eines Magnetfelds eine Spannungsversorgung für die Füllstandsanzeige und für die Auswerteelektronik des Füllstandmessers zu schalten.

Die US 2016/351927 A1 offenbart eine elektronische multistabile Anzeige, um einen Füllstand in einem Tank anzuzeigen.

Der Erfindung liegt die Aufgabe zugrunde, die Wartung eines spurgebundenen Fahrzeugs weiter zu vereinfachen.

Gelöst wird die Aufgabe durch die Gegenstände der unabhängigen Patentansprüche 1 und 6. Weiterbildungen und Ausgestaltungen der Erfindung finden sich in den Merkmalen der abhängigen Patentansprüche wieder.

Ein erfindungsgemäßes spurgebundenes Fahrzeug, insbesondere ein Schienenfahrzeug des Personenverkehrs, umfasst wenigstens eine Messeinrichtung, umfassend wenigstens einen Messwertaufnehmer zur Erfassung von Messwerten zu einer Messgröße, und wenigstens eine Anzeigeeinrichtung zur Anzeige wenigstens eines Messwerts. Die Anzeigeeinrichtung dient zur optischen Ausgabe wenigstens eines von der Messeinrichtung erfassten Messwert. Der Messwert ist dabei insbesondere aktuell oder zumindest der zuletzt erfasste Messwert. Die Anzeigeeinrichtung weist erfindungsgemäß wenigstens ein elektromagnetisch-mechanisches bistabiles Anzeigeelement auf, welches den letzten Anzeigeinhalt im spannungsfreien Zustand erhält. Im abgerüsteten, spannungsfreien Zustand wird vom elektromagnetisch-mechanisches bistabilen Anzeigeelement somit der im aufgerüsteten Zustand zuletzt erfasste Messwert angezeigt. Ein Beispiel für ein elektromagnetisch-mechanisches bistabiles Anzeigeelement ist ein sogenanntes Flip-Dot-Display.

Gemäß einer ersten Weiterbildung der Erfindung ist die Anzeigeeinrichtung von außen ablesbar am Fahrzeug angeordnet. Die Anzeigeeinrichtung ist insbesondere an einer Außenseite des Fahrzeugs angeordnet.

Gemäß einer weiteren Weiterbildung umfasst das spurgebundene Fahrzeug wenigstens einen Tank, insbesondere zur Aufnahme und Speicherung von Fluid, beispielsweise von Frisch-, Grau- oder Abwasser, wobei die Messeinrichtung zur Erfassung eines Füllstands im Tank geeignet ausgebildet und in oder am Tank angeordnet ist. Die Messeinrichtung umfasst somit mindestens einen Messwertaufnehmer zur Erfassung von Messwerten eines Füllstands im Tank. Der Tank ist weitergebildet ein Frisch-, Grau- oder Abwassertank einer Sanitäranlage oder einer Galley des Fahrzeugs. Das Anzeigeelement zeigt entsprechend den Füllstand des Tanks an.

Das spurgebundene Fahrzeug umfasst erfindungsgemäß einen Stelltaster, welcher im Bereich der Anzeigeeinrichtung angeordnet und mit der Anzeigeeinrichtung in geeigneter Weise verbunden ist und die Anzeigeeinrichtung und der Stelltaster geeignet ausgebildet sind bei Betätigung des Stelltasters einen vorgegebenen Anzeigezustand des bistabilen Anzeigeelements herzustellen.

Durch Betätigung des Stelltasters wird der Anzeigeinhalt des Anzeigeelements verändert. Stelltaster um Anzeigeeinrichtung sind dabei vorteilhaft ausgebildet, auch im abgerüsteten Zustand des Fahrzeugs und somit bei spannungsfreiem Anzeigeelement, einen vorgegebenen Anzeigezustand des bistabilen Anzeigeelements herzustellen und den angezeigten Anzeigeinhalt zu verändern. Die vorgegebenen Anzeigezustände des Anzeigeelement repräsentieren weitergebildet den Füllstand eines leeren oder eines vollen Tanks oder eines teilgefüllten Tanks.

Der Stelltaster ist erfindungsgemäß ausgebildet und mit der Anzeigeeinrichtung derart verbunden, dass durch Betätigung des Stelltasters eine Kraft auf das Anzeigeelement ausgeübt wird, dieses mechanisch in die gewünschte Anzeigeposition zu bewegen.

Der Stelltaster ist weitergebildet, in unmittelbarer Umgebung zur Anzeigeeinrichtung auf der Außenseite des Fahrzeugs von außen frei betätigbar angeordnet. Weitergebildet umfasst die Anzeigeeinrichtung den Stelltaster.

Zum Betreiben eines erfindungsgemäßen spurgebundenen Fahrzeugs wird im aufgerüsteten, betriebsbereiten Zustand des spurgebundenen Fahrzeugs wenigstens ein aktueller Messwert durch die Messeinrichtung erfasst und durch die Anzeigeeinrichtung ausgegeben, insbesondere vom Anzeigeelement angezeigt. Nach einem Abrüsten des spurgebundenen Fahrzeugs und spannungsfreischalten der Anzeigeeinrichtung wird wenigstens ein letzter im aufgerüsteten Zustand des Fahrzeugs erfasster Messwert durch die Anzeigeeinrichtung ausgegeben, insbesondere vom Anzeigeelement angezeigt, so dass dieser im abgerüsteten Zustand des Fahrzeugs abgelesen werden kann.

Umfasst das spurgebundene Fahrzeug einen Tank und eine Messeinrichtung zur Erfassung eines Messwerts zum Füllstand im Tank, kann der Tank auch im abgerüsteten Zustand des Fahrzeugs befüllt oder entleert werden, beispielsweise in dem Wasser im Tank abgelassen oder abgesaugt wird. Durch, beispielsweise manuelles, Betätigen des Stelltasters kann anschließend ein Anzeigezustand des Anzeigeelement repräsentativ für einen Füllstand eines vollen oder eines leeren Tanks hergestellt werden. Beispielsweise befüllt ein Servicetechniker zunächst den Tank. Nachfolgend betätigt er den entsprechenden Stelltaster, so dass das Anzeigeelement einen vollen Tank anzeigt.

Die Erfindung ermöglicht die Anzeige von Behälterpegelständen auch bei spannungsfrei abgestellten Fahrzeugen, da die Anzeigeeinrichtung ihren letzten Anzeigeinhalt im spannungsfreien Zustand beibehält. Bei der Kontrolle von Pegelständen können die Messelektrik und die dazugehörige Spannungsversorgung deaktiviert bleiben.

Der Anzeigeinhalt wird während des normalen Betriebs permanent aktualisiert. Nach Abfallen der Spannungsversorgung erfolgt keine Änderung von Tankpegelständen. Korrespondierend bleibt auch der Anzeigeinhalt unverändert.

Tankpegelstände werden somit permanent, insbesondere außen am Fahrzeug, angezeigt. Aufwändige Schaltungen zur Aktivierung und späteren Deaktivierung von Messequipment und Anzeige können dabei entfallen. Ebenso entfallen Wege für das Servicepersonal zu innerhalb des Fahrzeugs angeordneten Schaltelementen, an denen die Spannungsversorgung aktiviert werden muss. Wartezeiten bis zur Verfügbarkeit der Information werden überflüssig. Weiterhin verbessert sich der Komfort für das Servicepersonal da auch bei abgerüsteten Fahrzeugen Pegelstände leicht und schnell kontrolliert werden können.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch ein Schienenfahrzeug mit Frischwassertank und einer außen am Fahrzeug angebrachten Anzeigeeinrichtung zur Anzeige des Füllstands,
- Fig. 2: zeigt eine Anzeigeeinrichtung zur Anzeige des Füllstands,
- Fig. 3: zeigt eine Anzeigeeinrichtung zur Anzeige des Füllstands mit Stelltastern.

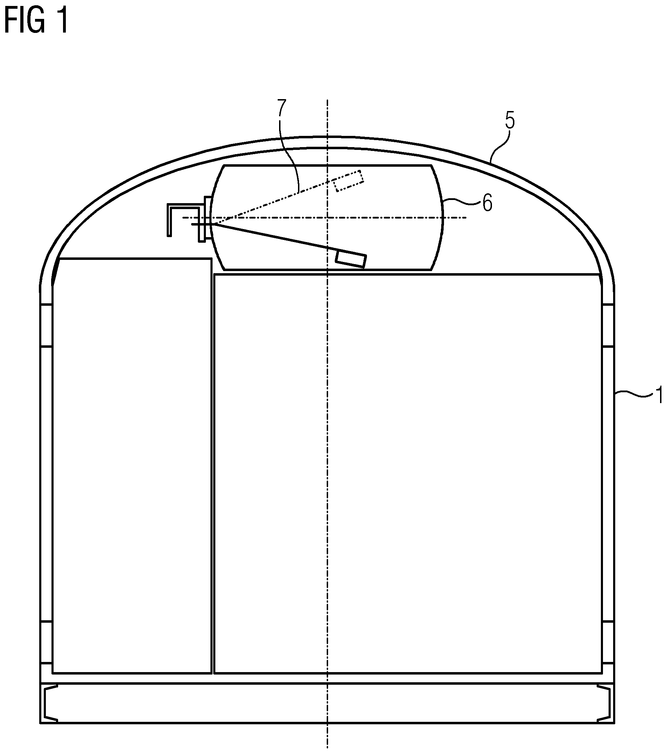

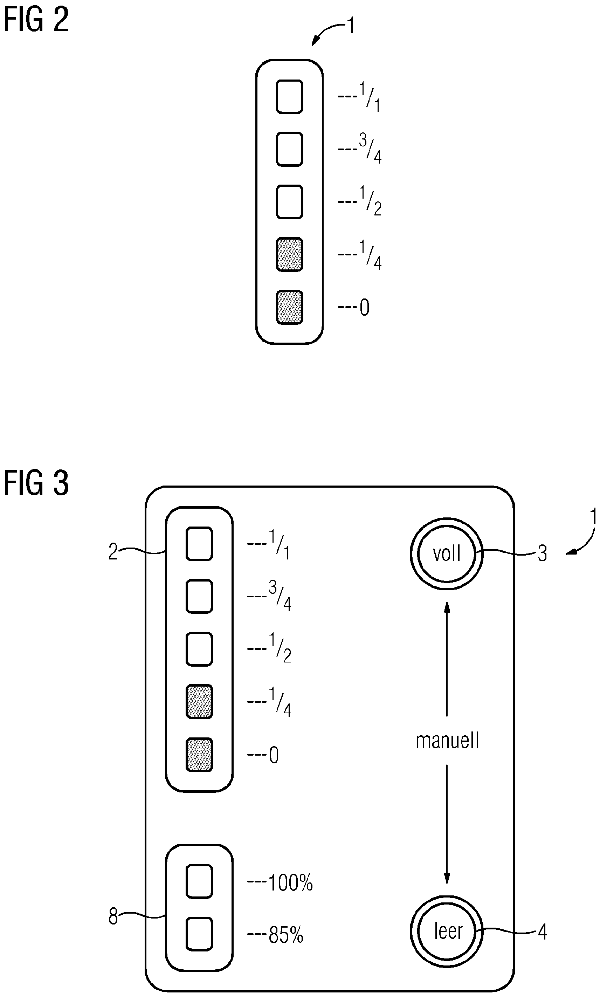

In Fig. 1 ist schematisch ein Schienenfahrzeug 5 im Querschnitt dargestellt. Es weist im Dachbereich einen Tank 6 für Frischwasser auf. Im Frischwassertank 6 ist ein Schwimmer 7 als Teil einer Messeinrichtung zur Erfassung des Füllstands im Tank 6 vorgesehen. Auf einer Außenseite des Fahrzeugs 5 ist eine Anzeigeeinrichtung 1 angeordnet. Diese zeigt den von der Messeinrichtung gemessenen Füllstand im Tank 6 so an, dass er von außen ablesbar ist. Die Anzeigeeinrichtung 1 ist in Fig. 2 skizziert. Sie ist ausgebildet, in Abhängigkeit des von der Messeinrichtung gemessenen Füllstand im Tank 6 einen den Füllstand repräsentierenden Wert auszugeben. Hier weist die Anzeigeeinrichtung 1 eine diskrete Skala auf. "0" repräsentiert einen leeren Tank, "1/1" einen vollen. Dazwischen werden die Füllstände z.B. in "Viertel-Schritten" angezeigt.

Der Erfindung liegt die Überlegung zu Grunde, dass sich Tankfüllstände nur durch Benutzung der angeschlossenen Verbraucher oder aktives Handeln ändern. Dieser Überlegung folgend, sind das Ermitteln eines Füllstandes und die Aktualisierung der zugehörigen Anzeige nur notwendig, wenn sich der Füllstand tatsächlich geändert hat.

Bei Schienenfahrzeugen ist zum Betrieb von Verbrauchern meist deren Versorgung mit elektrischer Energie notwendig. Daraus folgt, dass sich nach Abrüsten eines Zuges Tankfüllstände in abgerüstet abgestellten Fahrzeugen nicht mehr ändern.

Mit einer geeigneten Anzeige kann der letzte, gemessene Füllstand nun ununterbrochen und unverändert ausgegeben werden. Prinzipiell eignen sich dazu analoge Zeigeranzeigen, die im passiven Zustand nicht auf einen Startwert zurückfallen, sondern die Zeiger- oder Anzeigeposition beibehalten. Analogmechanische Lösungen scheinen anfällig und baulich aufwändig zu sein.

Besser geeignet scheinen bistabile Anzeigeelemente 2 wie in Figur 3 dargestellt. Dafür sind elektromechanische Ausführungen wie z.B. Flip-Dot Displays einsetzbar. Bei diesem Anzeigetyp wird ein beweglicher Anzeigeteil dem Betrachter zu- oder abgewandt. Dabei können beispielsweise die beiden Hälften der Anzeige unterschiedlich eingefärbt sein. Durch aktive Ansteuerung nehmen sie einen Anzeigezustand an und behalten diesen dann auch im spannungsfreien Zustand langfristig bei.

Die Anzeige wird während des normalen Betriebes permanent aktuell gehalten. Nach Abrüsten des Fahrzeuges 5 wird das die Anzeigeeinrichtung 1 spannungsfrei geschaltet und der Anzeigezustand bleibt unverändert erhalten. Im abgerüsteten Zustand bleiben synchron auch die Pegelstände der Tanks 6 unverändert, da die Verbraucher ebenfalls spannungsfrei und außer Betrieb sind. Die Anzeige gibt also permanent den tatsächlichen Pegelstand an, solange Pegeländerungen nur bei eingeschalteter Spannungsversorgung erfolgen. Dadurch sind Pegelstände, unabhängig vom Betriebszustand des Fahrzeuges 5, immer ablesbar.

Um auch Befüll- oder Entleerungsvorgänge an abgerüstet abgestellten Fahrzeugen 5 akkurat zu erfassen, können zusätzliche manuelle Stelltaster 3, 4 vorgesehen sein. Mit diesen Stelltastern 3, 4 werden die Anzeigeelemente 2 und/oder 8 manuell in den entsprechenden Anzeigezustand gebracht. Dazu wird an der Anzeigeeinrichtung 1 nach dem Befüllen eines abgerüstet abgestellten Fahrzeuges 5 die "voll" Taste - der Stelltaster 3 - betätigt. Für die Aktualisierung des Anzeigeelements 2 nach einer Entleerung des Frischwassertanks 6 bei abgerüstet abgestelltem Fahrzeug 5 ist eine "leer"-Taste denkbar. Diese wird jedoch eher selten genutzt werden, da die Entleerung eines Frischwassertanks 6 üblicherweise aus dem Fahrzeuginneren gestartet wird. Dabei kann man also von einer eingeschalteten Spannungsversorgung ausgehen. Bei Abwassertanks mit Absaugung von außen ist hingegen die "leer"-Taste für die Anzeige des Abwassertankpegels sinnvoll.

Fig. 3 veranschaulicht nun ein Beispiel für die Umsetzung einer Anzeigeeinrichtung mit Füllstandanzeigen sowohl für den Frisch-, als auch für einen Abwassertank. Das Anzeigeelement 2 zeigt einen Füllstand des Tanks 6 für Frischwasser an, das Anzeigeelement 8 hingegen für den Abwassertank. Die Anzeigeeinrichtung umfasst fürderhin einen Stelltaster 3 zur Änderung des Anzeigeeinhalts des Anzeigeelements 2, um einen vollen Frischwassertank zu repräsentieren, sowie einen Stelltaster 4 zur Änderung des Anzeigeeinhalts des Anzeigeelements 8, um einen leeren Abwassertank zu repräsentieren. Falls ein Fahrzeug im abgerüsteten Zustand befüllt oder entleert wird, kann an diesen Stelltastern 3, 4 die Anzeige manuell für den Frischwassertank auf "voll" bzw. für den Abwassertank auf "leer" gestellt werden.

Bei Einsatz des elektromechanischen Displays wird durch die Betätigung der Stelltaster das Display manuell mechanisch in die gewünschte Anzeigeposition bewegt. Eine Spannungsversorgung ist nicht notwendig.

## Patentansprüche

1. Spurgebundenes Fahrzeug (5) mit wenigstens einer Messeinrichtung (7) und wenigstens einer Anzeigeeinrichtung (1) zur Anzeige wenigstens eines Messwerts,
**dadurch gekennzeichnet, dass**
die Anzeigeeinrichtung (1) wenigstens ein elektromagnetisch-mechanisches bistabiles Anzeigeelement (2, 8) umfasst, wobei das spurgebundene Fahrzeug (5) einen Stelltaster (3, 4) umfasst, welcher im Bereich der Anzeigeeinrichtung (1) angeordnet und mit der Anzeigeeinrichtung (1) verbunden ist, wobei die Anzeigeeinrichtung (1) und der Stelltaster (3, 4) geeignet ausgebildet sind, bei Betätigung des Stelltasters (3, 4) einen vorgegebenen Anzeigezustand des bistabilen Anzeigeelements (2, 8) herzustellen, wobei der Stelltaster (3, 4) ausgebildet und mit der Anzeigeeinrichtung (1) derart verbunden ist, dass durch Betätigung des Stelltasters (3, 4) eine Kraft auf das Anzeigeelement (2, 8) ausgeübt wird, dieses mechanisch in die gewünschte Anzeigeposition zu bewegen.

2. Spurgebundenes Fahrzeug nach Anspruch 1,
**dadurch gekennzeichnet, dass**
die Anzeigeeinrichtung (1) von außen ablesbar am Fahrzeug (5) angeordnet ist.

3. Spurgebundenes Fahrzeug nach einem der Ansprüche 1 bis 3,
**dadurch gekennzeichnet, dass**
es wenigstens einen Tank (6) umfasst, wobei die Messeinrichtung (7) zur Erfassung eines Füllstands im Tank (6) geeignet ausgebildet und angeordnet ist.

4. Spurgebundenes Fahrzeug nach Anspruch 3,
**dadurch gekennzeichnet, dass**
der Tank (6) ein Frisch-, Grau- oder Abwassertank einer Sanitäranlage oder einer Galley des Fahrzeugs (5) ist.

5. Spurgebundenes Fahrzeug nach einem der Ansprüche 1 bis 4,
**dadurch gekennzeichnet, dass**
die vorgegebenen Anzeigezustände den Füllstand eines leeren oder eines vollen Tanks (6) repräsentieren.

6. Verfahren zum Betreiben eines spurgebundenen Fahrzeugs (5) nach einem der Ansprüche 3 bis 5, **gekennzeichnet durch** folgende Verfahrensschritte:
a. Erfassen wenigstens eines Messwerts durch die Messeinrichtung (7);
b. Anzeigen wenigstens eines aktuellen Messwerts durch die Anzeigeeinrichtung (1);
c. Abrüsten des spurgebundenen Fahrzeugs (5) und Spannungsfreischalten der Anzeigeeinrichtung (1);
d. Anzeigen wenigstens eines letzten, im aufgerüsteten Zustand des Fahrzeugs (5) erfassten Messwerts durch die Anzeigeeinrichtung (1);
e. Befüllen oder Entleeren des Tanks (6) im abgerüsteten Zustand des spurgebundenen Fahrzeugs (5);
f. Betätigen des Stelltasters (3, 4) zur Herstellung eines Anzeigezustands des bistabilen Anzeigeelements (2, 8) repräsentativ für einen Füllstand eines vollen oder eines leeren Tanks (6).

## Claims

1. Track-bound vehicle (5) having at least one measuring facility (7) and at least one display facility (1) for displaying at least one measured value,
**characterised in that**
the display facility (1) comprises at least one electromagnetic-mechanical bistable display element (2, 8), wherein the track-bound vehicle (5) comprises a control button (3, 4) which is arranged in the region of the display facility (1) and is connected to the display facility (1), wherein the display facility (1) and the control button (3, 4) are suitably embodied to establish a predetermined display state of the bistable display element (2, 8) when the control button (3, 4) is actuated, wherein the control button (3, 4) is embodied and connected to the display facility (1) in such a way that a force is exerted onto the display element (2, 8) by actuating the control button (3, 4) in order to move this mechanically into the desired display position.

2. Track-bound vehicle according to claim 1,
**characterised in that**
the display facility (1) is arranged so as to be readable on the vehicle (5) from the outside.

3. Track-bound vehicle according to one of claims 1 to 3, **characterised in that**
it comprises at least one tank (6), wherein the measuring facility (7) is suitably embodied and arranged to detect a fill level in the tank (6).

4. Track-bound vehicle according to claim 3,
**characterised in that**
the tank (6) is a fresh water, grey water or wastewater tank of a sanitary facility or a galley in the vehicle (5).

5. Track-bound vehicle according to one of claims 1 to 4, **characterised in that**
the predetermined display states represent the fill level of an empty or a full tank (6).

6. Method for operating a track-bound vehicle (5) according to one of claims 3 to 5,
**characterised by** the following method steps:
a. Detecting at least one measured value by means of the measuring facility (7);
b. Displaying at least one current measured value by means of the display facility (1);
c. Demobilising the track-bound vehicle (5) and disconnecting the voltage of the display facility (1);
d. Displaying at least one last measured value detected in the activated state of the vehicle (5) by means of the display facility (1);
e. Filling or emptying the tank (6) in the deactivated state of the track-bound vehicle (5);
f. Actuating the control button (3, 4) in order to establish a display state of the bistable display element (2, 8) which is representative of a fill level of a full or empty tank (6).

## Revendications

1. Véhicule (5) guidé sur rails comprenant au moins un dispositif (7) de mesure et au moins un dispositif (1) d'affichage pour l'affichage d'au moins une valeur de mesure,
**caractérisé en ce que**
le dispositif (1) d'affichage comprend au moins un élément (2, 8) d'affichage bistable électromagnétique-mécanique, dans lequel le véhicule (5) guidé sur rails comprend un palpeur (3, 4) de réglage, qui est monté dans la partie du dispositif (1) d'affichage et qui est relié au dispositif (1) d'affichage, dans lequel le dispositif (1) d'affichage et le palpeur (3, 4) de réglage sont constitués d'une manière appropriée pour donner, lorsque le palpeur (3, 4) de réglage est actionné, un état d'affichage donné à l'avance de l'élément (2, 8) d'affichage bistable, dans lequel le palpeur (3, 4) de réglage est constitué et est relié au dispositif (1) d'affichage de manière à ce que, en actionnant le palpeur (3, 4) de réglage, on applique une force à l'élément (2, 8) d'affichage pour mettre celui-ci mécaniquement dans la position d'affichage souhaitée.

2. Véhicule guidé sur rails suivant la revendication 1, **caractérisé en ce que**
le dispositif (1) d'affichage est monté sur le véhicule (5) en pouvant être lu de l'extérieur.

3. Véhicule guidé sur rails suivant l'une des revendications 1 à 2,
**caractérisé en ce qu'**
il comprend au moins un réservoir (6), le dispositif (7) de mesure étant constitué et monté de manière appropriée pour la détection d'un niveau de remplissage dans le réservoir (6).

4. Véhicule guidé sur rails suivant la revendication 3, **caractérisé en ce que**
le réservoir (6) est un réservoir d'eau fraîche, d'eau grise ou d'eau résiduaire d'une installation sanitaire ou d'une cambuse du véhicule (5).

5. Véhicule guidé sur rails suivant l'une des revendications 1 à 4,
**caractérisé en ce que**
les états d'affichage donnés à l'avance représentent le niveau de remplissage d'un réservoir (6) vide ou plein.

6. Procédé pour faire fonctionner un véhicule (5) guidé sur rails suivant l'une des revendications 3 à 5,
**caractérisé par** les stades de procédé suivants :
a. relevé d'au moins une valeur de mesure par le dispositif (7) de mesure ;
b. affichage d'au moins une valeur de mesure en cours par le dispositif (1) d'affichage ;
c. démontage du véhicule (5) guidé sur rails et déconnexion de la tension du dispositif (1) d'affichage ;
d. affichage par le dispositif (1) d'affichage d'au moins une dernière valeur de mesure relevée dans l'état démonté du véhicule (5) ;
e. remplissage ou vidange du réservoir (6) dans l'état démonté du véhicule (5) guidé sur rails ;
f. actionnement du palpeur (3, 4) de réglage pour donner un état d'affichage de l'élément (2, 8) d'affichage bistable représentatif d'un niveau de remplissage d'un réservoir (6) plein ou vide.
